# EUROPÄISCHE PATENTSCHRIFT

(11) **EP 2 730 951 B1**
(45) Veröffentlichungstag und Bekanntmachung des Hinweises auf die Patenterteilung: **27.12.2017**
(21) Anmeldenummer: 12401225.3
(22) Anmeldetag: 12.11.2012
(51) Int. Cl.: G01V 3/15, F16B 7/14

(54) **Suchgerät mit einer teleskopierbaren Trag-/Führungsstange**
Detector with a telescopic bearer/guide rod
Appareil de recherche avec une tige de guidage/barre porte-cintres télescopique

(43) Veröffentlichungstag der Anmeldung: 14.05.2014
(73) Patentinhaber: Vallon GmbH, 72800 Eningen (DE)
(72) Erfinder: Andel, Benjamin, 72074 Tübingen (DE)
(74) Vertreter: Klocke, Peter

(56) Entgegenhaltungen:
- WO-A1-2005/082221
- DE-A1- 4 318 563
- DE-A1- 10 257 515
- DE-U1- 29 510 304
- DE-U1- 29 813 686
- FR-A1- 2 944 113
- FR-A3- 2 886 988
- GB-A- 1 596 268
- TW-U- M 330 382
- US-A- 4 639 979
- US-A- 5 024 303
- US-A1- 2006 284 758

## Beschreibung

Die Erfindung betrifft ein Suchgerät mit einer teleskopierbaren Trag-/Führungsstange, an der an einem Ende eine Messsonde angeordnet ist, wobei die Trag-/Führungsstange mindestens zwei ineinander längsverschiebbare Rohre aufweist, von denen jeweils zwei in radialer Richtung benachbarte Rohre ein Außenrohr und ein Innenrohr bilden, und wobei das jeweilige Außenrohr an seinem zur Messsonde weisenden aufschubseitigen Rohrende eine Feststelleinrichtung für das eingreifende verschiebbare Innenrohr aufweist, wobei die Feststelleinrichtung als Klemmeinrichtung ausgebildet ist, die eine Profilschelle mit einem Schnellspannverschluss aufweist.

Derartige Suchgeräte sind in vielfältigen Ausführungsformen für verschiedene Einsatzzwecke bekannt. Beispielhaft wird auf handgeführte Eisen- und Metalldetektoren verwiesen, die zum Auffinden von im Boden verborgenen metallischen Gegenständen, beispielsweise Kampfmitteln, gedacht sind und nach magnetischen oder elektromagnetischen Verfahren arbeiten. Die teleskopierbare Trag-/Führungsstange ermöglicht durch Verschieben der Rohre eine Abstandsänderung von Messsonde und Griffstück und damit die Anpassung des Suchgerätes an unterschiedliche Einsatzbedingungen und Körpergrößen des Benutzers für eine ergonomische Handhabung. Dieser Abstand kann in der Regel zwischen einem Minimalabstand für den einfachen Transport des Suchgerätes, bei dem die längsverschiebbar geführten Rohre so weit wie möglich ineinander geschoben sind, und einem variablen einstellbaren Abstand für den Gebrauch verändert werden, bei dem die Rohre auseinandergezogen sind.

Teleskopierbare Trag-/Führungsstangen für Suchgeräte gibt es mit den unterschiedlichsten Konstruktionsmerkmalen. Exemplarisch wird auf die Druckschrift DE 295 10 304 U1 verwiesen. Als Feststelleinrichtung ist dort eine Rasteinrichtung offenbart, die einen durch Löcher in den ineinander verschiebbar angeordneten Rohren greifenden Rastbolzen aufweist, der an einer im Innern des Innenrohres gelagerten U-förmigen Blattfeder angebracht ist und das Innenrohr mit dem Außenrohr einstellbar in verschiedenen Positionen verriegelt. Das Außenrohr weist eine Anzahl von Eingriffslöchern für den Rastbolzen auf, die in einem gleichmäßigen Abstand zueinander angeordnet sind und somit definierte Längenmaße der Trag-/Führungsstange für die Nutzung vorgeben.

Als nachteilig wird bei diesem Stand der Technik angesehen, dass das Innenrohr gegenüber dem Außenrohr nicht stufenlos verstellbar ist, und dass die Trag-/Führungsstange aufgrund der im Innenrohr angeordneten Blattfeder auf zwei ineinander verschiebbare Rohre beschränkt ist. Der Minimalabstand von Messsonde und Griffstück, d.h. die Minimallänge der Trag-/Führungsstange bei vollständig in das Außenrohr eingeschobenem Innenrohr beträgt höchstens die Hälfte der Maximallänge der Trag-/Führungsstange bei vollständig auseinandergezogenen Rohren. Demzufolge kann das Suchgerät in der Transportstellung der längs verschiebbaren Rohre aufgrund seiner noch großen Länge nur schwerlich von einer Person mitgeführt werden.

Zum Stand der Technik wird weiterhin beispielhaft auf die Druckschriften DE 298 13 686 U1 und FR 2 944 113 A1 verwiesen.

Die DE 298 13 686 U1 offenbart ein Teleskoptragrohr für ein Metallsuchgerät, mit mindestens zwei teleskopartig ineinander verschiebbaren und in der gewünschten Relativposition mittels einer Klemmeinrichtung arretierbaren Rohren und mit einer Verdrehsicherung für die Rohre, so dass ein Verdrehen der Rohre nicht mehr möglich ist. Das Verklemmen der vorzugsweise eckig ausgebildeten Rohre kann mit einem am äußeren Rohr angebrachten Klemmhebel so erfolgen, dass das innere Rohr durch Druck auf eine Fläche festgehalten wird. Eine andere offenbarte Möglichkeit besteht darin, mit einem Spannband das Ende des äußeren Rohres zu verjüngen, so dass das innere Rohr am Gesamtumfang festgehalten und eine gleichmäßige Klemmwirkung erzielt wird.

Die FR 2 994 113 A1 lehrt ein Tragrohr für einen Metalldetektor, dass gestuft ausgebildet ist. Es weist ein oberes unveränderliches und ein unteres teleskopierbares Rohrelement auf, die über ein S-förmiges Zwischenteil miteinander verbunden sind. Das untere Rohrelement umfasst ein mit dem Zwischenteil verbundenes oberes Hauptrohrstück, ein in dem Hauptrohrstück verschiebbar aufgenommenes Schieberohrstück sowie eine Blockiereinheit zum Klemmen des Schieberrohrstücks am Hauptrohrstück. Alternativ kann das untere Rohrelement auch einstückig ausgebildet, an dem Zwischenteil verschiebbar geführt und mittels einer Blockiereinheit unverrückbar an den Zwischenteil geklemmt werden. In beiden Fällen ist die Blockiereinheit als Profilschelle mit einem Schnellspannverschluss ausgeführt.

Ausgehend von dem vorstehenden Stand der Technik liegt der Erfindung die Aufgabe zugrunde, ein Suchgerät mit einer teleskopierbaren Trag-/Führungsstange vorzuschlagen, bei der die Trag-/Führungsstange im zusammengeschobenen Zustand für den Transport des Suchgerätes möglicht kurz ist, d. h. möglicht wenig länger als die Länge eines der Rohre. Dabei soll die Feststelleinrichtung einfach aufgebaut und handhabbar und zudem dauerhaft funktionssicher sein.

Diese Aufgabe wird erfindungsgemäß durch ein Suchgerät mit den Merkmalen des unabhängigen Anspruchs 1 gelöst. Weitere vorteilhafte Ausführungsformen sind den abhängigen Ansprüchen zu entnehmen.

Danach ist bei dem erfindungsgemäßen Suchgerät mit einer teleskopierbaren Trag-/Führungsstange die Feststelleinrichtung als Klemmeinrichtung ausgebildet, die eine Profilschelle mit einem Schnellspannverschluss zum Festlegen des mindestens einen Innenrohrs an dem mindestens einen Außenrohr aufweist. Die Profilschelle ist außen an dem Außenrohr angeordnet und klemmt das Innenrohr. Sie greift insbesondere nicht in das Innenrohr ein, so dass das Innenrohr ein weiteres Rohr als zusätzliches Innenrohr längsverschiebbar aufnehmen kann, für das dieses wiederum ein Außenrohr bildet. Natürlich wiest dieses Innen-/Außenrohr dann auch eine Klemmeinrichtung für das zusätzliche Innenrohr auf, die ein Klemmen dieses Innenrohrs in entsprechender Weise ermöglicht. Die Erfindung ist jedoch nicht auf drei ineinander längs verschiebbare Rohre beschränkt. Es kann jede geeignete Anzahl von Rohren verwendet werden.

Erfindungsgemäß ist die Profilschelle an dem aufschubseitigen Rohrende des Außenrohres beziehungsweise eines ein Außenrohr bildenden Innenrohr unverrückbar angeordnet, d.h. sie ist zumindest in Längsrichtung des die Profilschelle tragenden Rohres schiebefixiert. Eine zusätzliche Drehfixierung ist ebenfalls zweckmäßig, jedoch ist auch eine begrenzte Drehbewegung der Profilschelle in Umfangsrichtung zulässig. Die verwendete Profilschelle weist insbesondere einen Haltering mit zwei halbschalenförmigen Spannringsegmenten auf. Diese sind an einer Stirnseite gelenkig miteinander verbunden und an der anderen Stirnseite über den Spannhebel miteinander verspannbar. Der Schnellspannverschluss ist einstellbar, d.h. die Klemmkraft ist veränderbar und kann individuell über eine Schraubverstellung eingestellt werden. Der Spannhebel ist zweckmäßigerweise an die Form des Halteringes bzw. der Spannringsegmente angepasst und steht kaum seitlich bei geklemmtem Innenrohr von den Rohren der Trag-/Führungsstange ab. Er ist somit nicht hinderlich bei der Benutzung des Suchgerätes und auch nicht unabsichtlich betätigbar. Die Klemmeinrichtung ist zuverlässig und selbstsichernd.

Die erfindungsgemäß vorgesehene Profilschelle ermöglicht ein optimales und einfaches Verstellen des mindestens einen Innenrohrs bezüglich dem zugeordneten umgreifenden Außenrohr in beliebiger Position, d.h. in jeder Relativstellung des Innenrohrs gegenüber dem Außenrohr. Dabei wird durch die hohe Stabilität der Profilschelle in Verbindung mit dem Schnellspannverschluss, der einen Spannhebel mit hoher Kraftübersetzung aufweist, eine hohe Klemmkraft erzielt. Bei niedrigen Materialkosten und geringem konstruktiven wie fertigungstechnischen Aufwand sind die Rohre der teleskopierbaren Trag-/Führungsstange einfach auseinanderziehbar, zusammenschiebbar und aneinander fixierbar. Die Einstellmöglichkeit dieser Rohre ist stufenlos. Dabei können die teleskopierbaren Rohre eine beliebige offene oder geschlossene Querschnittsform haben, wie beispielsweise rund, oval oder vieleckig ausgeführt sein. Bevorzugt werden in Umfangsrichtung geschlossene runde Rohre, die leichtgängig gleitend ineinander geführt sind.

Bei einer bevorzugten Ausführungsform der Erfindung weist das aufschubseitige Rohrende des Außenrohres, beziehungsweise eines auch ein Außenrohr bildendes Innenrohres, ein oder mehrere nebeneinander angeordnete in sich geschlossene Rohrdurchbrüche auf, durch die hindurch die Profilschelle das jeweilige Innenrohr an seine Außenseite klemmt. Die Klemmung des mindestens einen Innenrohrs der Trag-/Führungsstange erfolgt über eine entsprechende Anzahl von Klemmvorsprüngen, die innen an dem Haltering vorstehend angeformt sind, oder über ein oder mehrere nicht mit dem Haltering verbundene Klemmstücke, die lose in den Rohrdurchbrüchen aufgenommen und von dem Haltering übergriffen sind. Die Rohrdurchbrüche können eine beliebige Kontur aufweisen und in Umfangsrichtung und/oder in Längsrichtung des jeweiligen Außenrohres nebeneinander angeordnet sein. Die Klemmvorsprünge bzw. die Klemmstücke sind vorzugsweise in ihrer Form an die Kontur der Rohrdurchbrüche angepasst und greifen in die Rohrdurchbrüche radialbeweglich ein. Für eine gleichmäßige Klemmkraft ist es von Vorteil, mehrere Rohrdurchbrüche an dem aufschubseitigen Rohrende vorzusehen und diese in Umfangsrichtung des Außenrohres nebeneinander, vorzugsweise mit gleichem Abstand zueinander um das Rohrende verteilt anzuordnen.

Bei einer vorteilhaften Ausführungsform des erfindungsgemäßen Suchgerätes weist die Klemmeinrichtung mindestens ein Klemmstück auf, das in dem mindestens einen Rohrdurchbruch in radialer Richtung des Außenrohres beweglich angeordnet ist. Das wenigstens eine Klemmstück steht über den Außenumfang des Innenrohres vor und an mindestens einem der Spannringsegmente am Innenumfang an. Beim Spannen der Spannringsegmente werden alle vorhandenen Klemmstücke mit einer Klemmkraft beaufschlagt, die auf das zu klemmende Innenrohr einwirkt. Die Spannringsegmente können dabei optional mit einer innenliegenden Vertiefung für das mindestens eine Klemmstück ausgeführt sein, so dass die Profilschelle über das mindestens eine Klemmstück an dem Rohrende gehalten und lagefixiert ist. Die Vertiefung ist zweckmäßigerweise an die Querschnittsform eines solchen Klemmstückes angepasst. Sie kann jedoch auch davon abweichen und/oder als umlaufende Innenringnut ausgebildet sein. Es ist zudem vorteilhaft, dass jeweilige Klemmstück formstabil, d.h. plastisch oder elastisch unverformbar auszubilden, um eine möglichst hohe Klemmkraft zu bewirken. Jedoch sind elastisch verformbare Klemmstücke nicht ausgeschlossen, solange sie eine geeignete genügende Shorehärte aufweisen.

Vorzugsweise ist bei einer Ausführungsform der Erfindung zwischen den Spannringsegmenten und dem aufschubseitigen Rohrende ein Haltering angeordnet, der dort auf das Rohrende unverschiebbar aufgeschoben ist. Der Haltering ist an dem Rohrende zumindest in axialer Richtung des Außenrohres fixiert, jedoch idealerweise auch in Umfangsrichtung. Der Haltering ist hohlzylindrisch ausgebildet und trägt die Spannringsegmente unverrückbar. Dazu können an dem Haltering und/oder den Spannringsegmenten beliebige geeignete Haltemittel vorgesehen sein. Beispielsweise können der Haltering und die Spannringsegmente einander stirnseitig zumindest partiell übergreifen. Vorteilhafterweise weist der Haltering mindestens einen Ringdurchbruch auf, der in sich geschlossen ist und dem mindestens einen Rohrdurchbruch des aufschubseitigen Rohrendes zugeordnet ist. Idealerweise werden die gleiche Anzahl von Rohrdurchbrüchen und Ringdurchbrüchen vorgesehen. Jeder Ringdurchbruch ist dabei einem Rohrdurchbruch überlagert und geht insbesondere hindernisfrei in diesen über.

Bei einer besonders effizienten Ausführungsform der Trag-/Führungsstange des erfindungsgemäßen Suchgerätes durchdringt das mindestens eine Klemmstück der Klemmeinrichtung den Rohrdurchbruch und den Ringdurchbruch gemeinsam und steht dabei über den Außenumfang des Halteringes vor. Er stützt sich an mindestens einem der Spannringsegmente innen ab. Damit kann die Profilschelle mit Schnellspannverschluss das oder die Klemmstücke gegen das Innenrohr pressen und damit an dem Außenrohr unverschiebbar festklemmen. Insbesondere ist der Haltering dabei mittels des mindestens einen Klemmstückes axial und auch in Umfangsrichtung am aufschubseitigen Rohrende des Außenrohres gehalten.

Weiterhin kann der Haltering innen einen der Stirnseite des aufschubseitigen Rohrendes eines Außenrohrs oder eines ebenfalls ein Außenrohr bildenden Innenrohrs zugeordneten Positionieranschlag aufweisen. Der Positionieranschlag vereinfacht zum einen die Montage der Trag-/Führungsstange bei der Herstellung und wirkt zudem am Außenrohr als Festanschlag für die Klemmeinrichtung, insbesondere den Haltering eines ein Außenrohr bildenden Innenrohrs. Vorzugsweise ist der Positionieranschlag als stirnseitiger Ringbund oder Ringbundabschnitt ausgebildet, wobei der Haltering mit dem Großteil seiner Länge das jeweilige Rohrende des Außenrohres in axialer Richtung übergreift. Damit können Innenrohre weitmöglichst in das Außenrohr eingeschoben werden.

Weiterhin kann mindestens eines oder beide Spannungsringsegmente immer einen der Stirnseite des aufschubseitigen Rohrendes und/oder des Halteringes zugeordneten Ausrichtungsanschlag aufweisen, der als stirnseitiger Ringbundabschnitt ausführt ist. Dieser positioniert die Spannringsegmente beim Verspannen miteinander gegenüber dem Haltering positionsgenau. Außerdem wirkt der Ausrichtungsanschlag auch als Festanschlag für die Klemmeinrichtung des Innenrohres, wenn dieses als Außenrohr ein weiteres Innenrohr aufnimmt.

Bei einer besonders vorteilhaften Ausführungsform der Erfindung ist eines der beiden Spannringsegmente an den Haltering angeformt und das andere Spannringsegment gelenkig mit dem Haltering, vorzugsweise mit dem angeformten Spannringsegment verbunden. Dies vereinfacht den Aufbau der Profilschelle mit Schnellspannverschluss wesentlich und auch das Verspannen der Spannringsegmente miteinander. Dabei ist der Spannhebel an dem angeforderten Spannringsegment schwenkbar gelagert. Der Spannhebel weist vorzugsweise eine den Spannringsegmenten entsprechende Biegung auf. Vorteilhafterweise ist das angeformte und damit unbewegliche Spannringsegment außen mit einer Aufnahmevertiefung für den Spannhebel ausgeführt, so dass der Spannhebel bei miteinander verspannten Spannringsegmenten, d.h. bei geklemmtem Innenrohr in radialer Richtung nicht mehr oder nur geringfügig über den Haltering vorsteht.

Nachfolgend wird die Erfindung anhand eines in der Zeichnung dargestellten Ausführungsbeispiels näher erläutert. Weitere Merkmale der Erfindung ergeben sich aus der folgenden Beschreibung des Ausführungsbeispiels der Erfindung in Verbindung mit den Ansprüchen und der beigefügten Zeichnung. Die einzelnen Merkmale der Erfindung können für sich allein oder zu mehreren bei unterschiedlichen Ausführungsformen der Erfindung verwirklicht sein. Es zeigen:
- Figur 1: ein erfindungsgemäßes Suchgerät mit teleskopierbarer Trag-/Führungsstange in perspektivischer Ansicht;
- Figur 2: eine perspektivische Ausschnittsvergrößerung der Trag-/Führungsstange aus Figur 1 im Klemmbereich eines Innenrohrs an einem Außenrohr;
- Figur 3: den Klemmbereich aus Figur 2 in einer Stirnseitenansicht mit geschnittenem Innen- und Außenrohr, im nicht geklemmten Zustand des Innenrohrs; und
- Figur 4: den Klemmbereich aus Figur 2 in Schnittdarstellungen im geklemmten Zustand mit der Schnittebene neben den Klemmstücken (Figur 4a) und durch die Klemmstücke (Figur 4b).

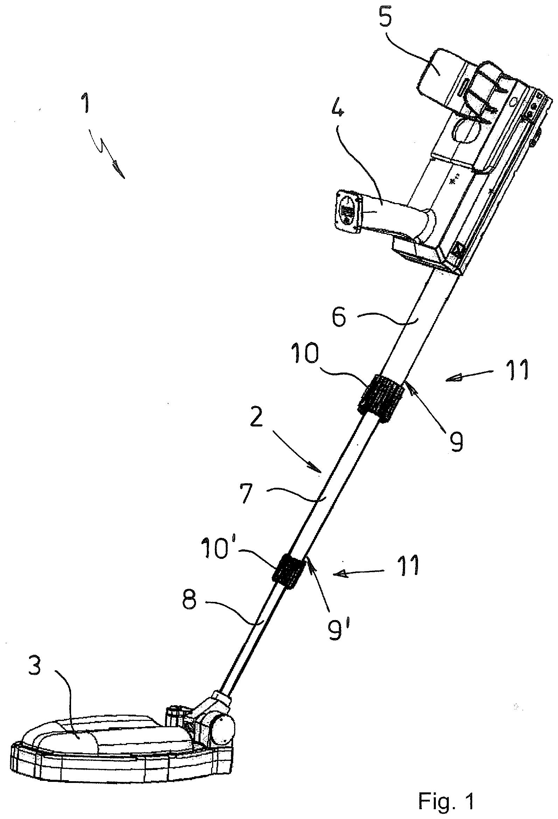

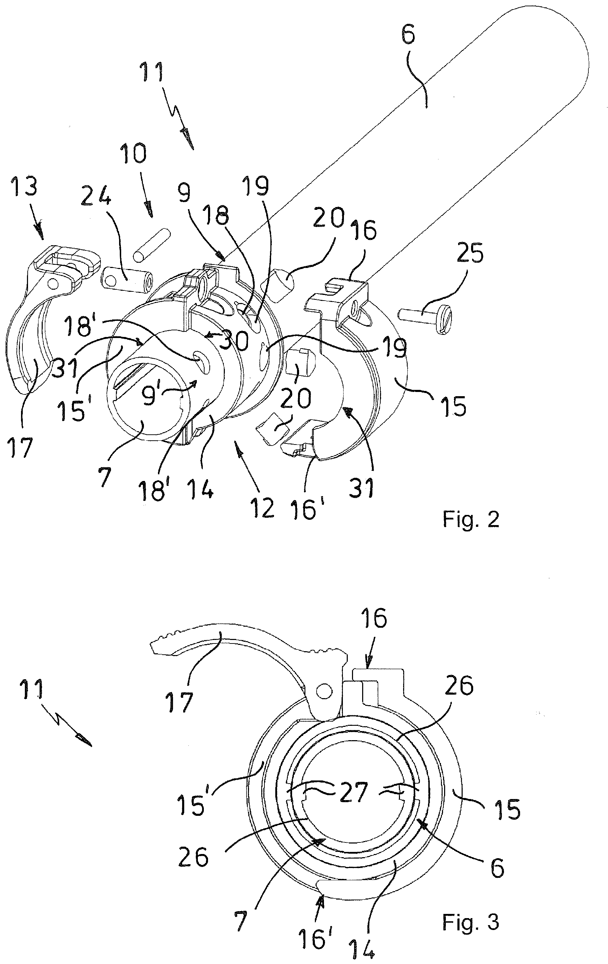

Die Figur 1 zeigt ein erfindungsgemäßes Suchgerät 1 mit einer teleskopierbaren Trag-/Führungsstange 2 an deren einem Ende eine Messsonde 3 und an deren anderen Ende ein Griffstück 4 nahe einer Unterarmstütze 5 angeordnet ist. Die Trag-/Führungsstange weist drei ineinander längs verschiebbar geführte Rohre 6, 7, 8 auf, wobei das Rohr 6 ein reines Außenrohr und das Rohr 8 ein reines Innenrohr ist und wobei das Rohr 7 ein Innenrohr 7 für das Außenrohr 6 und ein Außenrohr 7 für das Innenrohr 8 bildet. An den aufschubseitigen Rohrenden 9, 9' der Rohre 6 bzw. 7 ist jeweils eine Klemmeinrichtung 10, 10' angeordnet, mit der das Innenrohr 8 an dem Rohr 7 und das Rohr 7 an dem Außenrohr 6 in einer beliebigen Relativstellung festlegbar ist. Die Klemmeinrichtungen 10, 10' an den Klemmbereichen 11, 11', die in der Figur 1 nur schematisch dargestellt sind, sind bis auf die Größe identisch bei gleicher Wirkungsweise ausgebildet. Sie sind im Durchmesser an den Querschnitt der Rohre 6, 7 angepasst. In der Figur 2 ist die Klemmeinrichtung 10, mit der das Innenrohr 7 an dem Außenrohr 6 festklemmbar ist, im Detail dargestellt.

Die Figur 2 zeigt eine Ausschnittsvergrößerung der Trag-/Führungsstange aus Figur 1 im Klemmbereich 11. Die Klemmeinrichtung 10 ist als Profilschelle 12 mit einem Schnellspannverschluss 13 ausgeführt. Sie ist an dem aufschubseitigen Rohrende 9 des Außenrohrs 6 unverrückbar angeordnet. Die Profilschelle 12 weist einen Haltering 14 mit zwei halbschalenförmigen Spannringsegmenten 15, 15' auf, die an eine Stirnseite 16 gelenkig miteinander verbunden und an der anderen Stirnseite 16' über einen Spannhebel 17 miteinander verspannbar sind. Das erste Spannringsegment 15 ist gegenüber dem zweiten Spannringsegment 15' und dem Haltering 14 in radialer Richtung beweglich, wobei das zweite Spannringsegment 15' bei dem dargestellten Ausführungsbeispiel an dem Haltering 14 angeformt ist. Die Erfindung ist jedoch nicht auf diese Ausführungsform beschränkt. Alternativ kann der Haltering 14 die beiden Spannringsegmente 15, 15' auch beweglich tragen.

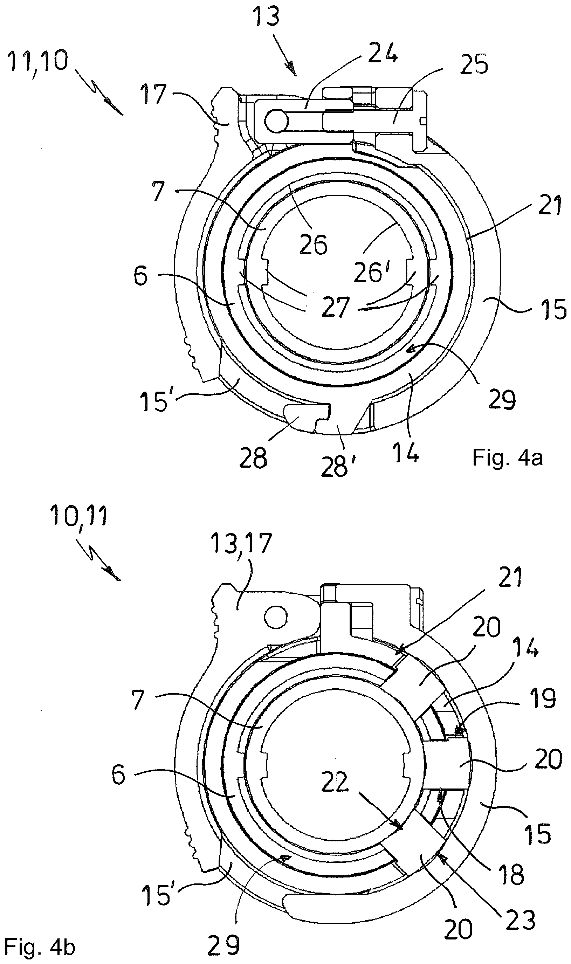

In der Figur 2 ist das Innenrohr 7 vollständig in das Außenrohr 6 eingeschoben. Es ist ohne die Klemmeinrichtung 10' an dem aufschubseitigen Rohrende 9' dargestellt. An dem Rohrende 9' des Innen-/Außenrohrs 7, mit dem das Rohr 7 auf das in der Zeichnung nicht dargestellte Innenrohr 8 aufschiebbar ist, sind mehrere in Umfangsrichtung nebeneinander angeordnete in sich geschlossene Rohrdurchbrüche 18' angeordnet, die auch als Rohrdurchbrüche 18 am aufschubseitigen Rohrende 9 des Außenrohrs 6 in ähnlicher Form vorhanden sind. Dort sind die Rohrdurchbrüche 18 teilweise nicht sichtbar, da sie vom Haltering 14 stellenweise verdeckt sind. Der Haltering 14 weist den Rohrdurchbrüchen 18 des Außenrohrs 6 zugeordnete Ringdurchbrüche 19 auf, die den Rohrdurchbrüchen 18 überlagert angeordnet sind. Die Rinddurchbrüche 19 und die Rohrdurchbrüche 18 gehen hindernislos ineinander über. Sie sind zur Aufnahme einer entsprechenden Anzahl von Klemmstücken 20 der Klemmeinrichtung 10 vorgesehen, die den zugeordneten Ringdurchbruch 19 und den entsprechenden Rohrdurchbruch 18 gemeinsam jeweils radial durchdringen. Die Klemmstücke 20 stehen, wie die Figur 4b zeigt, über den Außenumfang 21 des Halteringes 14 vor und stützen sich innen an dem beweglichen Spannringsegment 15 ab. Sie sind in der Form an die Außenkontor der Ringdurchbrüche 19 bzw. der Rohrdurchbrüche 18 angepasst. Die Klemmstücke 20 sind insbesondere formstabil ausgebildet und können mittels des beweglichen Spannringsegmentes 15 beim Verspannen der beiden Spannringsegmente 15, 15' miteinander kraftbeaufschlagt gegen das Innenrohr 7 gepresst werden.

Die Klemmstücke 20 bewirken durch den gemeinsamen Eingriff in die Ringdurchbrüche 19 des Halterings 14 und in die Rohrdurchbrüche 18 des Außenrohres 6, dass der Haltering 14 mit dem angeformten Spannringsegment 15' unverschiebbar in Axial- und Umfangsrichtung des Außenrohres 6 auf dem aufschubseitigen Rohrende 9 aufgeschoben ist. Der Haltering 14 mit dem angeformten Spannringsegment 15' trägt das bewegliche Spannringsegment 15 unverrückbar. Wie der Figur 4b zu entnehmen ist, stehen die Klemmstücke 20 stehen mit einer vorderen Stirnfläche 22 an dem Innenrohr 7 an und stützen sich mit einer hinteren Stirnfläche 23 an dem beweglichen Spannringsegment 15 ab. Beim Verspannen des beweglichen Spannringsegments 15 mit dem unbeweglichen Spannringsegment 15' mittels des Spannhebel 17 werden die Klemmstücke 20, wie in der Figur 4b abgebildet, gegen das Innenrohr 7 gepresst, so dass das Innenrohr 7 gegenüber dem Außenrohr 6 fixiert wird. Zur Einstellung der Presskraft ist eine Gewindehülse 24 mit eindrehbarer Einstellschraube 25 vorgesehen, die den schwenkbar gelagerten Spannhebel 17 mit dem beweglichen Spannringsegment 15 verbindet.

Die Figur 3 zeigt den Klemmbereich 11 aus der Figur 2 in einer Stirnseitenansicht auf das Außenrohr 6 sowie auf den Haltering 14 der Trag-/Führungsstange 2 im nicht geklemmten Zustand des Innenrohrs 7 an dem Außenrohr 6. Das Außenrohr 6 weist an seinem Innenumfang 26 zwei in Längsrichtung verlaufende leistenförmige Führungselemente 27 auf, die verhindern, dass das Innenrohr 7 und das Außenrohr 6 vollflächig aneinander liegen. Dies erleichtert eine axiale Verschiebung der Rohre 6, 7 zueinander, wenn die Klemmeinrichtung 10 nicht wirksam ist. Der Spannhebel 17 steht bei nicht geklemmtem Innenrohr 7 seitlich von dem Haltering 14 ab. In dieser Stellung ist das bewegliche Spannringsegment 15 nicht mit dem an den Haltering 14 angeformten Spannringsegment 15' verspannt, so dass die in der Figur 3 nicht sichtbaren Klemmstücke 20 das Innenrohr 7 nicht klemmend an dem Außenrohr 6 lösbar festhalten. Die dem Spannhebel 17 fernen Stirnseiten 16' der Spannringsegmente 15, 15' sind ineinander verhakt, die anderen dem Spannhebel 17 nahe angeordneten Stirnseiten 16 der Spannringsegmente 15, 15' voneinander beabstandet.

In der Figur 4a ist der Klemmbereich 11 im geklemmten Zustand der beiden Rohre 6, 7 in einer Schnittdarstellung abgebildet. Der dargestellte Schnitt erstreckt sich in der Ebene der zur Einstellung der Klemmkraft vorgesehenen Gewindehülse 24 mit Einstellschraube 25. Deutlich sind jetzt die Verbindungshaken 28, 28' der beiden Spannringsegmente 15, 15' zu sehen, über die das bewegliche Spannringsegment 15 schwenkbeweglich mit unbeweglichen Spannringsegment 15' verbunden ist. Im verspannten Zustand der beiden Spannringsegmente 15, 15' liegt der Spannhebel 17 an dem Halteringsegment 15' des Halterings 14 seitlich an. Außerdem ist zu sehen, dass das Innenrohr 7, das gleichzeitig ein Außenrohr 7 für das nicht dargestellte Innenrohr 8 innen ebenfalls Führungselemente 27 aufweist, die entsprechend den Führungselementen 27 des Außenrohrs 6 wirken.

Die Figur 4b zeigt nochmals den Klemmbereich 11 im geklemmten Zustand von Außenrohr 6 und Innenrohr 7 in einer Schnittdarstellung, wobei diesmal die Schnittebene durch die Klemmstücke 20 verläuft. Jetzt sind die Rohrdurchbrüche 18 und die Ringdurchbrüche 19 deutlich sichtbar, in denen die Klemmstücke 20 aufgenommen sind. Die Klemmstücke 20 sind mit der vorderen Stirnseite 22 an dem Innenrohr 7 in Anlage und stützen sich mit ihrer hinteren Stirnseite 23 kraftbeaufschlagt an dem beweglichen Spannringsegment 15 ab. Die vordere Stirnseite 22 der Klemmstücke 20 ist nicht eben ausgebildet, sondern weist zwei Teilflächen auf, die winkelig zueinander verlaufen und tangential an dem Innenrohr 7 anliegen.

Wie die Figur 2 zeigt, weist der Haltering 14 innen einer der Stirnseite 29 des aufschubseitigen Rohrendes 9 des Außenrohrs 6 zugeordneten Positionieranschlag 30 auf, der als stirnseitiger Ringbundabschnitt ausgebildet ist. Der Positionieranschlag 30 weist nur eine geringe Länge auf, so dass der Haltering 14 mit dem Großteil seiner Länge das aufschubseitige Rohrende 9 in axialer Richtung übergreift. Die Spannringsegmente 15, 15' weisen einen entsprechenden Ausrichtungsanschlag 31 auf.

## Patentansprüche

1. Suchgerät (1) mit einer teleskopierbaren Trag-/Führungsstange (2), an der an einem Ende eine Messsonde (3) angeordnet ist, wobei die Trag-/Führungsstange (2) mindestens zwei ineinander längsverschiebbare Rohre (6, 7, 8) aufweist, von denen jeweils zwei in radialer Richtung benachbarte Rohre (6, 7 bzw. 7, 8) ein Außenrohr (6, 7) und ein Innenrohr (7, 8) bilden, wobei das jeweilige Außenrohr (6, 7) an seinem zur Messsonde (3) weisenden aufschubseitigen Rohrende (9, 9') eine Feststelleinrichtung 10, 10' für das eingreifende verschiebbare Innenrohr (7, 8) aufweist, wobei die Feststelleinrichtung als Klemmeinrichtung (10, 10') ausgebildet ist, die eine Profilschelle (12) mit einem Schnellspannverschluss (13) aufweist, **dadurch gekennzeichnet, dass** die Profilschelle (12) an dem aufschubseitigen Rohrende (9, 9') des Außenrohres (6, 7) unverrückbar angeordnet ist und einen Haltering (14) mit zwei halbschalenförmigen Spannringsegmenten (15, 15') aufweist, die an einer ihrer Stirnseiten (16') gelenkig miteinander verbunden und an ihren anderen Stirnseiten (16) über einen Spannhebel (17) miteinander verspannbar sind.

2. Suchgerät nach Anspruch 1, **dadurch gekennzeichnet, dass** das aufschubseitige Rohrende (9, 9') des Außenrohres (6, 7) ein oder mehrere nebeneinander angeordnete in sich geschlossene Rohrdurchbrüche (18, 18') aufweist.

3. Suchgerät nach Anspruch 2, **dadurch gekennzeichnet, dass** die Klemmeinrichtung (10, 10') mindestens ein Klemmvorsprung oder ein Klemmstück (20) aufweist, das in dem mindestens einen Rohrdurchbruch (18, 18') radial beweglich angeordnet ist und an dem jeweiligen Außenrohr außen vorsteht und an einem der Spannringsegmente (15, 15') innen ansteht.

4. Suchgerät nach Anspruch 3, **dadurch gekennzeichnet, dass** das Klemmstück (20) formstabil ist und das Spannringsegment (15, 15') das Klemmstück (20) beim Verspannen der beiden Spannringsegmente (15, 15') miteinander kraftbeaufschlagt gegen das Innenrohr (7, 8) presst.

5. Suchgerät nach einem der vorstehenden Ansprüche, **dadurch gekennzeichnet, dass** der Haltering (14) auf das jeweilige aufschubseitige Rohrende (9, 9') des jeweiligen Außenrohres (6, 7) unverschiebbar aufgeschoben ist und die Spannringsegmente (15, 15') unverrückbar trägt.

6. Suchgerät nach einem der vorstehenden Ansprüche 2 bis 5, **dadurch gekennzeichnet, dass** der Haltering (14) mindestens einen in sich geschlossenen Ringdurchbruch (19) aufweist, der dem mindestens einen Rohrdurchbruch (18) zugeordnet und diesem überlagert ist.

7. Suchgerät nach Anspruch 6, **dadurch gekennzeichnet, dass** das mindestens eine Klemmstück (20) der Klemmeinrichtung (10, 10') den Rohrdurchbruch (18) und den Ringdurchbruch (19) gemeinsam durchdringt und über den Außenumfang (21) des Halteringes (14) vorsteht und sich an einem der Spannringsegmente (15, 15') innen abstützt.

8. Suchgerät nach Anspruch 7, **dadurch gekennzeichnet, dass** der Haltering (14) mittels des mindestens einen Klemmstückes (20) am aufschubseitigen Rohrende (9, 9') des Außenrohres (6, 7) gehalten ist.

9. Suchgerät nach einem der vorstehenden Ansprüche 5 bis 8, **dadurch gekennzeichnet, dass** der Haltering (14) innen einen der Stirnseite (29) des aufschubseitigen Rohrendes (9, 9') zugeordneten Positionieranschlag (30) aufweist.

10. Suchgerät nach Anspruch 9, **dadurch gekennzeichnet, dass** der Positionieranschlag (30) als stirnseitiger Ringbund oder Ringbundabschnitt ausgebildet ist, wobei der Haltering (14) mit dem Großteil seiner Länge das aufschubseitige Rohrende (9, 9') in axialer Richtung übergreift.

11. Suchgerät nach einem der vorstehenden Ansprüche, **dadurch gekennzeichnet, dass** mindestes eines der Spannringsegmente (15, 15') innen einen der Stirnseite (29) des aufschubseitigen Rohrendes (9, 9') zugeordneten Ausrichtungsanschlag (31) aufweist, der als stirnseitiger Ringbundabschnitt ausgeführt ist.

12. Suchgerät nach einem der vorstehenden Ansprüche, **dadurch gekennzeichnet, dass** eines der beiden Spannringsegmente (15, 15') an den Haltering (14) angeformt ist und dass das andere Spannringsegment (15', 15) gelenkig mit dem Haltering (14), vorzugsweise mit dem angeformten Spannringsegment (15) verbunden ist.

13. Suchgerät nach einem der vorstehenden Ansprüche, **dadurch gekennzeichnet, dass** der Spannhebel (17) eine den Spannringsegmenten (15, 15') entsprechende Biegung aufweist.

## Claims

1. A detector (1) with a telescopic carrier/guide rod (2), on which a measuring probe (3) is disposed on one end, whereby the carrier/guide rod (2) features at least two tubes (6, 7, 8) movable longitudinally in one another, in which respectively two tubes (6, 7 and/or 7, 8) disposed adjacently in a radial direction form an outer tube (6, 7) and an inner tube (7, 8), whereby the respective outer tube (6, 7) on its sliding tube end (9, 9') facing the measuring probe (3) features a clamping means 10, 10' for engaging the movable inner tube (7, 8) whereby the clamping means is formed as a clamping device (10, 10') that features one profile clip (12) with a quick-locking device (13), **characterised in that** the profile clip (12) is disposed on the sliding tube end (9, 9') of the outer tube (6, 7) immovably and features a holding ring (14) with two half shell-shaped clamping ring segments (15, 15') that on one of its face sides (16') are flexibly connected together and on its other face sides (16) can be clamped together by means of a clamping lever (17).

2. The detector according to claim 1 **characterised in that** the sliding tube end (9, 9') of the outer tube (6, 7) features one or several in themselves closed tube breakthroughs (18, 18') disposed next to one another.

3. The detector according to claim 2 **characterised in that** the clamping device (10, 10') features at least a clamping protrusion or a clamping piece (20) in which at least one tube breakthrough (18, 18') is disposed radially movably and protrudes on the respective outer tube and stands inside one of the clamping ring segments (15, 15').

4. The detector according to claim 3 **characterised in that** the clamping piece (20) is form-stable and the clamping ring segment (15, 15') presses the clamping piece (20) when clamping the two clamping ring segments (15, 15') together under pressure against the inner tube (7, 8).

5. The detector according to one of the preceding claims, **characterised in that** the holding ring (14) is pushed on the respective sliding tube end (9, 9') of the respective outer tube (6, 7) immovably and bears the clamping ring segments (15, 15') immovably.

6. The detector according to one of the preceding claims 2 to 5, **characterised in that** the holding ring (14) features at least a ring breakthrough (19) closed in itself, which is assigned to at least one tube breakthrough (18) and overlaps the same.

7. The detector according to claim 6 **characterised in that** at least one clamping piece (20) of the clamping device (10, 10') penetrates the tube breakthrough (18) and the ring breakthrough (19) together and protrudes over the outer circumference (21) of the holding ring (14) and braces itself inside one of the clamping ring segments (15, 15').

8. The detector according to claim 7 **characterised in that** the holding ring (14) is held by means of at least one clamping piece (20) on the sliding tube end (9, 9') of the outer tube (6, 7).

9. The detector according to one of the preceding claims 5 to 8, **characterised in that** the holding ring (14) features position limit stop (30) assigned inside the face side (29) of the sliding tube end (9, 9').

10. The detector according to claim 9, **characterised in that** the position limit stop (30) is formed as a face-side ring collar or ring collar section, whereby the holding ring (14) with the large part of its length overlaps the sliding tube end (9, 9') in an axial direction.

11. The detector according to one of the preceding claims, **characterised in that** at least one of the clamping ring segments (15, 15') features an alignment limit stop (31) assigned inside on the face side (29) of the sliding tube end (9, 9'), which is formed as a face-side ring collar section.

12. The detector according to one of the preceding claims, **characterised in that** one of the two clamping ring segments (15, 15') is formed on the holding ring (14) and that the other clamping ring segment (15', 15) is connected flexibly with the holding ring (14), preferably with the formed clamping ring segment (15).

13. The detector according to one of the preceding claims, **characterised in that** the clamping lever (17) features a bend corresponding to the clamping ring segments (15, 15').

## Revendications

1. Appareil de recherche (1) comportant une perche de support/guidage télescopique (2) à une extrémité de laquelle est disposée une sonde de mesure (3), dans lequel la perche de support/guidage (2) présente au moins deux tubes (6, 7, 8) pouvant coulisser longitudinalement l'un dans l'autre, parmi lesquels chaque fois deux tubes (6, 7, respectivement 7, 8) adjacents dans la direction radiale forment un tube extérieur (6, 7) et un tube intérieur (7, 8), le tube extérieur (6, 7) respectif présentant, à son extrémité de tube côté emboîtement (9, 9') tournée vers la sonde de mesure (3), un dispositif de blocage 10, 10' pour le tube intérieur (7, 8) coulissant qui s'y engage, le dispositif de blocage étant réalisé sous la forme d'un dispositif de serrage (10, 10') qui présente un collier profilé (12) doté d'un moyen de serrage rapide (13), **caractérisé en ce que** le collier profilé (12) est disposé de manière fixe sur l'extrémité de tube côté emboîtement (9, 9') du tube extérieur (6, 7) et présente une bague de blocage (14) avec deux segments de bague de serrage (15, 15') en forme de demi-coque qui sont reliés l'un à l'autre de manière articulée à une de leurs faces frontales (16') et peuvent être serrés ensemble à leurs autres faces frontales (16) au moyen d'un levier de serrage (17).

2. Appareil de recherche selon la revendication 1, **caractérisé en ce que** l'extrémité de tube côté emboîtement (9, 9') du tube extérieur (6, 7) présente un ou plusieurs percements de tube (18, 18') indépendants juxtaposés.

3. Appareil de recherche selon la revendication 2, **caractérisé en ce que** le dispositif de serrage (10, 10') présente au moins une saillie de serrage ou une pièce de serrage (20) qui est disposée de manière mobile radialement dans ledit au moins un percement de tube (18, 18'), fait saillie extérieurement sur le tube extérieur respectif et est en contact intérieurement avec un des segments de bague de serrage (15, 15').

4. Appareil de recherche selon la revendication 3, **caractérisé en ce que** la pièce de serrage (20) est indéformable et le segment de bague de serrage (15, 15') presse la pièce de serrage (20) contre le tube intérieur (7, 8) lors du serrage des deux segments de bague de serrage (15, 15') l'une avec l'autre sous l'effet d'une force.

5. Appareil de recherche selon l'une des revendications précédentes, **caractérisé en ce que** la bague de blocage (14) est enfilée sans possibilité de coulissement sur l'extrémité de tube côté emboîtement (9, 9') respective du tube extérieur (6, 7) respectif et porte de manière fixe les segments de bague de serrage (15, 15').

6. Appareil de recherche selon l'une des revendications précédentes 2 à 5, **caractérisé en ce que** la bague de blocage (14) présente au moins un percement de bague (19) indépendant qui est associé audit au moins un percement de tube (18) et superposé à celui-ci.

7. Appareil de recherche selon la revendication 6, **caractérisé en ce que** ladite au moins une pièce de serrage (20) du dispositif de serrage (10, 10') traverse conjointement le percement de tube (18) et le percement de bague (19), fait saillie au-delà de la circonférence extérieure (21) de la bague de blocage (14) et s'appuie intérieurement sur un des segments de bague de serrage (15, 15').

8. Appareil de recherche selon la revendication 7, **caractérisé en ce que** la bague de blocage (14) est maintenue sur l'extrémité de tube côté emboîtement (9, 9') du tube extérieur (6, 7) au moyen de ladite au moins une pièce de serrage (20).

9. Appareil de recherche selon l'une des revendications précédentes 5 à 8, **caractérisé en ce que** la bague de blocage (14) présente intérieurement une butée de positionnement (30) associée à la face frontale (29) de l'extrémité de tube côté emboîtement (9, 9').

10. Appareil de recherche selon la revendication 9, **caractérisé en ce que** la butée de positionnement (30) est réalisée sous la forme d'une collerette annulaire ou d'une section de collerette annulaire frontale, la bague de blocage (14) venant en prise en direction axiale sur l'extrémité de tube côté emboîtement (9, 9') par une grande partie de sa longueur.

11. Appareil de recherche selon l'une des revendications précédentes, **caractérisé en ce qu'**au moins un des segments de bague de serrage (15, 15') présente intérieurement une butée d'alignement (31) associée à la face frontale (29) de l'extrémité de tube côté emboîtement (9, 9'), laquelle est réalisée sous la forme d'une section de collerette annulaire frontale.

12. Appareil de recherche selon l'une des revendications précédentes, **caractérisé en ce qu'**un des deux segments de bague de serrage (15, 15') est formé sur la bague de blocage (14) et que l'autre segment de bague de serrage (15', 15) est relié de manière articulée à la bague de blocage (14), de préférence au segment de bague de serrage (15) formé sur elle.

13. Appareil de recherche selon l'une des revendications précédentes, **caractérisé en ce que** le levier de serrage (17) présente une courbure correspondant à celle des segments de bague de serrage (15, 15').
